(19) Europäisches Patentamt
European Patent Office
Office européen des brevets

(11) EP 2 911 444 A1

(12) EUROPEAN PATENT APPLICATION

(43) Date of publication:
26.08.2015 Bulletin 2015/35

(51) Int Cl.:
H04W 28/02 (2009.01)　　　H04L 12/26 (2006.01)
H04W 24/08 (2009.01)　　　H04W 72/00 (2009.01)

(21) Application number: 15156405.1

(22) Date of filing: 24.02.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 24.02.2014　KR 20140021424

(71) Applicant: Samsung Electronics Co., Ltd
Gyeonggi-do 443-742 (KR)

(72) Inventors:
• Ko, Soo-Min
443-742 Gyeonggi-do (KR)
• Kim, Eun-Yong
443-742 Gyeonggi-do (KR)

(74) Representative: Jenkins, Richard Gavin
HGF Limited
Saviour House
9 St Saviourgate
York YO1 8NQ (GB)

(54) **Method and apparatus for measuring load of cell in wireless communication system**

(57)　Provided is a method and apparatus for efficiently measuring a load of a cell in a wireless communication system. The method includes dividing terminals in a cell into terminal groups that are different in resource allocation scheme, and calculating the number of wireless resources that the terminals effectively occupy based on the amount of required wireless resources for each terminal group; and measuring a load of the cell using the calculated number of wireless resources.

FIG.1

**Description**

**TECHNICAL FIELD**

The present disclosure relates to a method and apparatus for measuring a load of a cell in a wireless communication system in which a plurality of cells exist.

**BACKGROUND**

Wireless communication systems have evolved from the early communication system providing the voice-oriented services into the high-speed, high-quality wireless packet data communication system providing data services and multimedia services. Therefore, mobile communication systems providing high-speed packet data services, such as High Speed Downlink Packet Access (HSDPA) and Long Term Evolution (LTE) of 3rd Generation Partnership Project (3GPP), have been developed. Due to the increasing use of smart devices such as smart phones and tablet Personal Computers (PCs) supporting high-speed packet data services, an increase in massive multimedia data in the wireless communication system may act as a load in each cell of a base station.

Generally, each cell has a plurality of terminals that desire to receive services, and wireless resources of each cell are allocated to transmit traffic of the plurality of terminals. A cell having a less amount of traffic requested by terminals has a large margin in allocating wireless resources to terminals, and a cell having a larger amount of traffic requested by terminals may hardly provide seamless services due to the lack of wireless resources.

The extent of the burden that a base station (or a cell) experiences in transmitting traffic requested by terminals, using wireless resources given to each cell in the wireless communication system is referred to as a load of the cell. In order to efficiently provide communication services to terminals, it is important to quantitatively determine a load of each cell.

For example, a base station needs to quantitatively determine a load in performing the following operation.

First, the base station performs call admission control in consideration of the cell-specific load. Specifically, the base station rejects the newly created call of a terminal if the load of the cell is greater than a predetermined threshold and accepts the call if the load of the cell is less than the threshold.

Second, the base station performs load balancing in consideration of the cell-specific load. For example, it is preferable to allow a terminal in a cell having a higher load to receive a service in a cell having a lower load so that a plurality of cells have a similar load.

Third, the base station determines an Almost Blank Subframe (ABS) ratio required for an enhanced Inter-Cell Interference Control (eICIC) operation in consideration of the cell-specific load. The eICIC is load balancing technology proposed to efficiently distribute a load of a macro cell to small cells such as pico cells.

Since the small cell is weak in transmit power and low in antenna height compared with the macro cell, the load of the macro cell may not be sufficiently distributed to the small cell, if the typical base station-terminal association rule (i.e., a rule in which a base station with the highest signal strength services a terminal) is used. Therefore, in order to further distribute the load to the small cell, the eICIC provides a service in the small cell with respect to a terminal, for which signal strength from the small cell is less than signal strength from the macro cell by a Cell Range Expansion (CRE) bias (dB), thereby making it possible to distribute the load of the macro cell to the pico cell. If the CRE bias is, for example, 0dB, in order to ensure the signal quality of a terminal (or a CRE terminal) which could not be serviced in the small cell, the macro cell reduces the interference to the small cell by avoiding data transmission in a specific subframe.

The subframe in which the macro cell avoids data transmission is called an Almost Blank Subframe (ABS). For improvement of the performance of the entire network including the macro cell and the small cell, it is necessary to appropriately determine a ratio of the ABS to the entire subframe. When determining the ratio of the ABS includes a load of a macro cell, the base station should consider a load occupied by terminals in a CRE area among the small-cell terminals, and a load occupied by terminals in a non-CRE area among the small-cell terminals. It is necessary to quantitatively determine a load of the base station even for the eICIC operation.

Examples of the conventional load measurement method for quantitatively measuring a load of a cell includes a first method of quantitatively measuring a load of a cell based on the number of terminals that receive a service in the cell, and a second method of quantitatively measuring a load of a cell based on the value determined by dividing a sum of the number of wireless resources (such as Resource Blocks (RBs) in the LTE system) that terminals use in the cell, by the total number of RBs in the cell.

The first load measurement method is a load measurement method that is appropriate when terminals in a cell require the same amount of wireless resources. However, if the terminals in the cell generate different amounts of traffic, or if the terminals require different amounts of wireless resources since the terminals have different channel qualities, it is not preferable to measure the load of the cell based on the number of terminals. For example, assuming that a cell 'a' provides a service to 5 terminals requiring one RB in every subframe and a cell 'b' provides a service to one terminal requiring 50 RBs in every subframe, if the load is measured based on the number of terminals receiving a service, the base station will determine that the cell 'a' is higher in load than the cell 'b', causing inappropriate load measurement.

The second load measurement method is meaningful in terms of measuring a ratio of wireless resources that are actually used for a cell having a low load. However, for a cell having a high load, it is no longer possible to accurately determine whether the load is high or low. For example, assuming that full buffer traffic enough to fill up a buffer of each terminal is applied for 10 terminals in a cell 'a' and the full buffer traffic is applied for one terminal in a cell 'b', a base station using the second load measurement method determines that the cell 'a' and the cell 'b' both have the maximum load. In this case, the base station does not determine that the cell 'a' is higher in load than the cell 'b', so the second load measurement method may also be an inappropriate load measurement.

Therefore, a way to quantitatively determine a load of each cell according to the actual situation is required to provide efficient services in the wireless communication system.

The above information is presented as background information only to assist with an understanding of the present disclosure. No determination has been made, and no assertion is made, as to whether any of the above might be applicable as prior art with regard to the present disclosure.

## SUMMARY

To address the above-discussed deficiencies, it is a primary object to provide a method and apparatus for efficiently measuring a load of a cell in a wireless communication system.

Another aspect of various embodiments of the present disclosure is to provide a method and apparatus for quantitatively measuring a load of each cell in a wireless communication system in which a plurality of cells exist.

In accordance with various embodiments of the present disclosure, a method is provided for measuring a load of a cell in a wireless communication system. The method includes dividing terminals in a cell into terminal groups which are different in resource allocation scheme, calculating the number of wireless resources that the terminals effectively occupy based on the amount of required wireless resources for each terminal group, and measuring a load of the cell using the calculated number of wireless resources.

In accordance with various embodiments of the present disclosure, a base station is provided for measuring a load of a cell in a wireless communication system. The base station includes a transceiver configured to transmit and receive data to or from terminals in the cell; and a controller configured to schedule allocation of wireless resources to the terminals divide the terminals into terminal groups that are different in resource allocation scheme, calculate the number of wireless resources that the terminals effectively occupy based on the amount of required wireless resources for each terminal group, and measure a load of the cell using the calculated number of wireless resources.

Other aspects, advantages, and salient features of the disclosure will be apparent to those skilled in the art from the following detailed description, which, taken in conjunction with the annexed drawings, discloses exemplary embodiments of the disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates the concept of a load of a cell according to various embodiments of the present disclosure;
FIG. 2 illustrates a method for measuring a load of a cell in a wireless communication system according to various embodiments of the present disclosure;
FIG. 3 illustrates a scheme of dividing terminal groups in a wireless communication system according to various embodiments of the present disclosure;

FIG. 4 illustrates a method for measuring a load of a cell in a wireless communication system according various embodiments of the present disclosure;

FIG. 5 illustrates a scheme of dividing terminal groups in a wireless communication system according to various embodiments of the present disclosure;

FIG. 6 illustrates a method for measuring a load of a cell in a wireless communication system according to various embodiments of the present disclosure; and

FIG. 7 illustrates a configuration of a base station according to various embodiments of the present disclosure.

Throughout the drawings, like reference numerals will be understood to refer to like parts, components, and structures.

## DETAILED DESCRIPTION

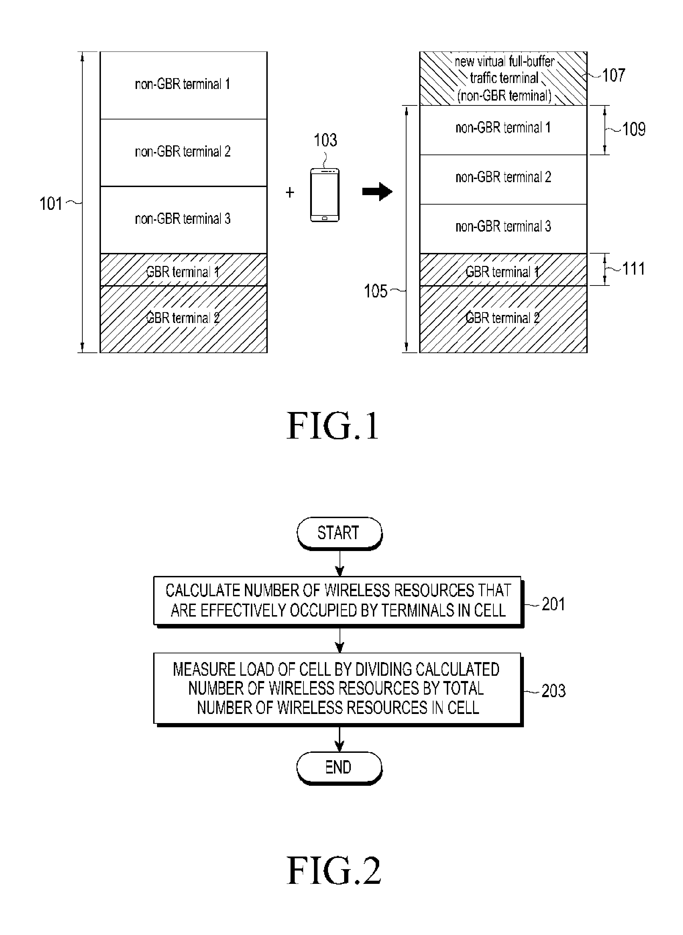

FIGURES 1 through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communications system. The following description with reference to the accompanying drawings is provided to assist in a comprehensive understanding of exemplary embodiments of the disclosure as defined by the claims and their equivalents. It includes various specific details to assist in that understanding but these are to be regarded as merely exemplary. Accordingly, those of ordinary skilled in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the disclosure. Accordingly, it should be apparent to those skilled in the art that the following description of exemplary embodiments of the present disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Although certain embodiments of the present disclosure will be described in connection with a Long Term Evolution (LTE) system by way of example, certain embodiments of the present disclosure are not necessarily limited to the LTE system, and the load measurement scheme according to certain embodiments of the present disclosure are applied to various wireless communication systems using the same or similar resource allocation scheme. The load measurement scheme according to certain embodiments of the present disclosure is used for load measurement of both the downlink and the uplink.

Certain embodiments of the present disclosure proposes a new load measurement scheme of defining a value determined by dividing the number of wireless resources that terminals in a cell effectively occupy, by the total number of wireless resources in the cell, as a load of the cell. Certain embodiments of the present disclosure will be described in connection with the LTE system by way of example, and the number of wireless resources is construed as the number of RBs that are units in which wireless resources are managed in the LTE system.

When a load of a cell is represented by "L," the total number of RBs in the cell is represented by "N," and the number of wireless resources that terminals in the cell effectively occupy is represented by "$N_{eff}$," the load of the cell is defined as shown in Equation (1) below.

$$L = \frac{N_{eff}}{N}$$

................(1)

In Equation (1), $N_{eff}$ is defined as a value determined by subtracting the number "$N_{full}$" of RBs that at least one virtual full-buffer traffic terminal that has newly entered the cell is allocated, from the total number N of RBs in the cell, and is calculated as shown in Equation (2) below. In accordance with Equation (1) and Equation (2), the load of the cell is measured as shown in Equation (3) below.

$$N_{eff} = N - N_{full}$$

$$\ldots\ldots\ldots\ldots\ldots(2)$$

$$L = \frac{N - N_{full}}{N}$$

$$\ldots\ldots\ldots\ldots\ldots(3)$$

The Neff is different in concept from the number of RBs that are in use by terminals in the cell, and certain embodiments of the present disclosure propose two examples of calculating (or determining) $N_{eff}$. A first example is a scheme of calculating $N_{eff}$ by dividing terminals in the cell into a Guaranteed Bit Rate (GBR) terminal group and a non-GBR terminal group. In the LTE system, a GBR terminal means a terminal that is preferentially allocated the fixed wireless resources (i.e., RBs) so that the terminal is guaranteed a given bit rate, and a non-GBR terminal means a terminal that has failed to be allocated the fixed wireless resources. A virtual full-buffer traffic terminal that has newly entered the cell is regarded as a non-GBR terminal in the first example. According to certain embodiments, the load of the cell is divided into a load generated by the GBR terminal group and a load generated by the non-GBR terminal group. The second example is a scheme of calculating $N_{eff}$ by comparing a value determined using an amount of data in a terminal buffer of terminals in the cell and an amount of data that can be transmitted per RB, with an amount of allocated RBs for the terminal, to divide terminals in the cell into different terminal groups. In the case of the second example, the GBR terminal group includes not only the GBR terminals, but also the non-GBR terminals that have transmitted all the amount of data in the buffer. Each example of calculating (or determining) $N_{full}$ will be described in detail below.

FIG. 1 illustrates the concept of a load of a cell according to various embodiments of the present disclosure. Referring to FIG. 1, reference numeral 101 represents the number N of RBs use by terminals in the cell. The terminals in the cell are divided into, for example, a GBR terminal group to which GBR terminals 1 and 2 belong, and a non-GBR terminal group to which non-GBR terminals 1, 2 and 3 belong. Reference numeral 103 shows that a full-buffer traffic terminal (such as a terminal, to which full buffer traffic enough to fill up a buffer of the terminal is applied) has newly entered the cell. The full-buffer traffic terminal is regarded as a non-GBR terminal. Reference numeral 105 represents the number $N_{eff}$ of wireless resources that terminals in the cell effectively occupy, the $N_{eff}$ being used for load measurement according to certain embodiments of the present disclosure. Reference numeral 107 represents the number $N_{full}$ of RBs that a virtual full-buffer traffic terminal regarded as the non-GBR terminal is allocated. Reference numerals 109 and 111 represent the number of RBs (such as loads of a non-GBR terminal and a GBR terminal) in use by the non-GBR terminal and the GBR terminal, respectively. FIG. 1 shows that in certain embodiments of the present disclosure, a load of a cell (such as a load of a base station) is measured using $N_{eff}$ 105 that is defined as N 101 - $N_{full}$ 107.

In certain embodiments of the present disclosure, the virtual full-buffer traffic terminal is introduced to define a load of a cell. More specifically, a high load of a cell means that the cell has a relatively less margin in allocating wireless resources to terminals, and a low load of a cell means that the cell has a relatively large margin in allocating wireless resources to terminals. Therefore, certain quantitative criteria are required in order to determine a degree of the margin (such as a degree of the load) in allocating wireless resources to terminals. The virtual full-buffer traffic terminal is the concept that has been introduced for the quantitative criteria. In other words, in a case where a certain virtual terminal has newly entered the cell, it is possible to quantitatively measure a load of the cell by quantitatively measuring the amount of wireless resources that the virtual terminal can be allocated.

In certain embodiments of the present disclosure, the $N_{eff}$, representing the number of wireless resources that terminals in the cell effectively occupy, provides the criteria for performing quantitative load measurement by using the virtual full-buffer traffic terminal as a medium, and it is possible to determine a degree of the margin (such as a degree of the load) for wireless resources in allocating wireless resources to the virtual full-buffer traffic terminal using the $N_{eff}$. The virtual full-buffer traffic terminal is construed as a virtual terminal that is used as a medium for the quantitative load measurement, not a terminal that actually generates a load in the cell. When the virtual terminal is regarded as a GBR terminal, the virtual terminal cannot be used for load measurement since the virtual terminal is allocated all the wireless resources required. For this reason, the virtual terminal is regarded as a non-GBR terminal in certain embodiments of the present disclosure.

FIG. 2 illustrates a method for measuring a load of a cell in a wireless communication system according to various embodiments of the present disclosure.

In step 201, a base station calculates the number of wireless resources that terminals in the cell effectively occupy. For example, in the LTE system, the base station calculates a value determined by subtracting the number $N_{full}$ of RBs that a virtual full-buffer traffic buffer is allocated, from the total number N of RBs in the cell as shown in Equation (2) to calculate the number $N_{eff}$ of wireless resources that the terminals effectively occupy. In step 203, the base station measures the quantitative load of the cell by dividing the calculated number $N_{eff}$ of wireless resources by the total number N of wireless resources in the cell.

Examples of calculating or determining the $N_{full}$ will be described in detail below.

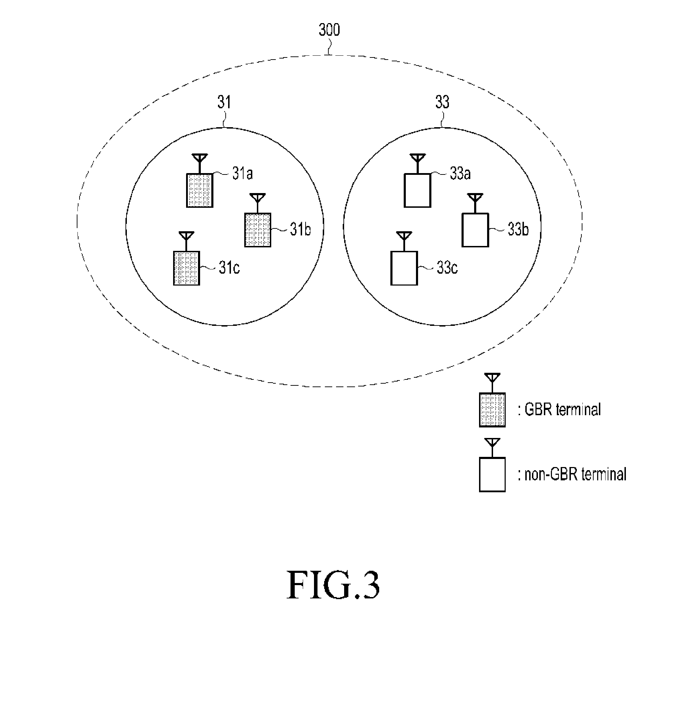

FIG. 3 illustrates a scheme of dividing terminal groups in a wireless communication system according to various embodiments of the present disclosure.

In the method for measuring a load of a cell, according to certain embodiments, the load of the cell is divided into a load generated by the GBR terminal group and a load is generated by the non-GBR terminal group. As shown in FIG. 3, terminals in a cell 300 are divided into terminals 31a, 31b and 31c in a GBR terminal group 31 and terminals 33a, 33b and 33c in a non-GBR terminal group 33.

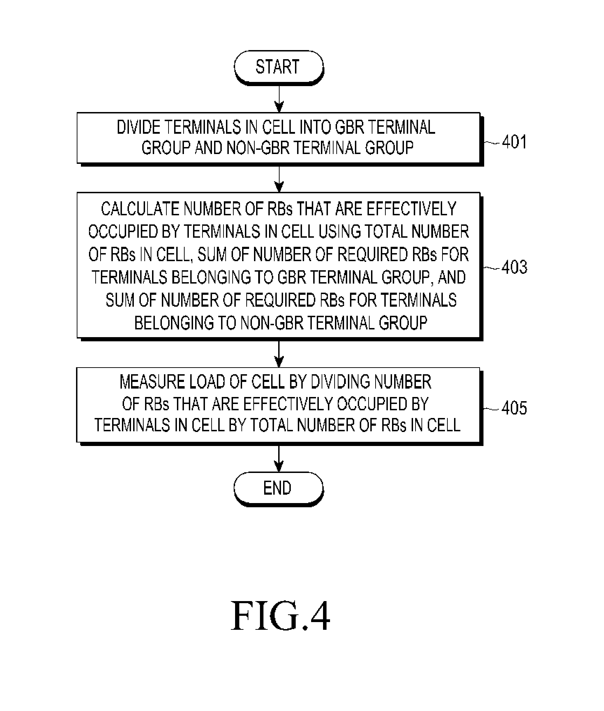

FIG. 4 illustrates a method for measuring a load of a cell in a wireless communication system according to various embodiments of the present disclosure.

In step 401, a base station divides terminals in the cell into a GBR terminal group and a non-GBR terminal group as shown in the example of FIG. 3. In step 403, the base station calculates the number $N_{eff}$ of RBs that the terminals in the cell effectively occupy using the total number N of RBs in the cell, a sum of the number of required RBs for terminals belonging to the GBR terminal group, and the number of required RBs for terminals belonging to the non-GBR terminal group.

More specifically, in step 403, the $N_{eff}$ is determined as a value obtained by subtracting the number $N_{full}$ of RBs that a virtual full-buffer traffic terminal regarded as a non-GBR terminal is allocated, from the total number N of RBs in the cell as shown in Equation (2). When the GBR terminal group is represented as a set A, the number of RBs required by a terminal 'i' where 'i' is a terminal index) is represented by $N_i$, and a ratio of RBs that a new non-GBR terminal regarded as the non-GBR terminal will be allocated is represented by R, then the $N_{full}$ can be expressed as shown in Equation (4) below in certain embodiments.

$$N_{full} = (N - \sum_{i \in A} N_i) \times R \qquad \dots\dots\dots\dots\dots\dots(4)$$

where $\sum_{i \in A} N_i$ means a sum of the number of required RBs for terminals belonging to the GBR terminal group.

The ratio R of RBs that the new non-GBR terminal will be allocated is determined by a method of allocating the RBs, which are left after being allocated to the terminals in the GBR terminal group in the cell, to terminals in the non-GBR terminal group. For example, the remaining RBs are uniformly allocated to the terminals in the non-GBR terminal group. This uniform allocation method includes a method of allocating resources using the known Proportional Fair (PF) scheduling with respect to the terminals in the non-GBR group. When the PF scheduling is used, the ratio R of RBs that the new non-GBR terminal will be allocated can be expressed as shown in Equation (5) below.

$$R = \frac{1}{(\text{effective number of non - GBR terminals} + 1)} \qquad \dots\dots\dots\dots(5)$$

In Equation (5), the effective number of non-GBR terminals is the concept that is extended compared with the number of terminals belonging to the non-GBR terminal group. In certain embodiments, when the total number of RBs in the cell is represented by N, the non-GBR terminal group is represented as a set B, and the number of RBs required by a terminal 'i' is represented by $N_i$, then the effective number of non-GBR terminals can be defined as shown in Equation (6) below.

$$\text{effective number of non - GBR terminals} = \frac{\sum_{i \in B} N_i}{N} \qquad \dots\dots\dots \dots.(6)$$

where $\sum_{i \in B} N_i$ means a sum of the number of required RBs for terminals belonging to the non-GBR terminal group.

For example, assuming that the total number of RBs is 50, a non-GBR terminal 1 requires 50 RBs, a non-GBR terminal 2 requires 20 RBs, and a non-GBR terminal 3 requires 30 RBs, the effective number of non-GBR terminals, which is calculated using Equation (6), is 2, meaning that when a base station measures a load of a cell, there are two non-GBR terminals requiring 50 RBs. In addition, when each non-GBR terminal requires all the RBs as all the non-GBR terminals have sufficient Buffer Occupancy (BO) (or amount of data in a buffer), the effective number of non-GBR terminals is the same value as the actual number of non-GBR terminals belonging to the non-GBR terminal group.

RBs are required to transmit traffic of non-GBR terminals, and the amount of required RBs for each non-GBR terminal corresponds to a value determined by dividing the Buffer Occupancy (BO) of the terminal by the amount of data that can be transmitted per RB. The maximum number of RBs that each non-GBR terminal requires is limited to the maximum number of RBs for given wireless resources, and the number of required RBs for each non-GBR terminal can be calculated using Equation (7) below.

$$N_i = \min\left( \frac{BO_i}{TBS_i}, N \right) \quad \dots\dots\dots\dots(7)$$

where $N_i$ represents the number of required RBs for a terminal 'i', $BO_i$ represents the Buffer Occupancy (BO) of the terminal 'i', $TBS_i$ represents an amount of data than can be transmitted per RB for the terminal 'i', and min(a, b) represents an operation to output the minimum value out of 'a' and 'b'.

Summarizing Equation (2), Equation (4), Equation (5) and Equation (6), the number $N_{eff}$ of RBs that terminals in the cell effectively occupy can be written as Equation (8) below.

$$N_{eff} = \left( N - \frac{N - \sum_{i \in A} N_i}{\frac{\sum_{i \in B} N_i}{N} + 1} \right) \quad \dots\dots\dots\dots(8)$$

where N represents the total number of RBs that the base station uses, i.e., the total number of RBs in the cell,

$\sum_{i \in A} N_i$ represents a sum of the number of required RBs for terminals belonging to a GBR terminal group A, and

$\sum_{i \in B} N_i$ represents a sum of the number of required RBs for terminals belonging to a non-GBR terminal group B. After calculating the number $N_{eff}$ of RBs that terminals in the cell effectively occupy, the base station measures a load L of the cell by dividing the number $N_{eff}$ of RBs that terminals in the cell effectively occupy, by the total number N of RBs in the cell as sown in Equation (9) below, in step 405.

$$L = \frac{1}{N} \cdot \left( N - \frac{N - \sum_{i \in A} N_i}{\frac{\sum_{i \in B} N_i}{N} + 1} \right)$$

$$= \frac{1}{N} \sum_{i \in A} N_i + \frac{1}{N} \left( \frac{N - \sum_{i \in A} N_i}{N + \sum_{i \in B} N_i} \right) \sum_{i \in B} N_i \qquad \ldots\ldots\ldots\ldots\ldots(9)$$

When the load L of the cell is defined as in certain embodiments, it is possible to separately determine the load that each terminal in the cell generates. In other words, when a GBR terminal group is represented as a set A and the number of RBs required by a terminal 'i' is represented by $N_i$, then the load $L_i^A$ that a terminal 'i' belonging to the set A of the GBR terminal group generates individually can be expressed as $L_i^A = \frac{1}{N} N_i$, $i \in A$. In addition, when a non-GBR terminal group is represented as a set B, then the load $L_i^B$ that a terminal 'i' belonging to the set B generates individually can be expressed as $L_i^B = \frac{1}{N} \left( \frac{N - \sum_{i \in A} N_i}{N + \sum_{i \in B} N_i} \right) N_i$, $i \in B$. When the above notation of the load is used, the load L of the base station (or cell) can be divided into a load by the GBR terminal group and a load by the non-GBR terminal group as shown in Equation (10) below.

$$L = \sum_{i \in A} L_i^A + \sum_{i \in B} L_i^B \qquad \ldots\ldots\ldots\ldots(10)$$

where $\sum_{i \in A} L_i^A$ represents a load by the GBR terminal group, and $\sum_{i \in B} L_i^B$ represents a load by the non-GBR terminal group.

According to certain embodiments, a load generated by each terminal can be separately determined, which is usefully applied in determining a ratio of the ABS required for the eICIC operation which is load balancing technology. In order to correctly determine a ratio of the ABS to the entire subframe, it is necessary to consider a load of a macro cell, a load occupied by terminals in a CRE area among the small-cell terminals, and a load occupied by terminals in a non-CRE area among the small-cell terminals. Certain embodiments are applied when a load of a pico cell is measured by dividing the load of the pico cell into a load occupied by terminals in the CRC area among the pico-cell terminals and a load occupied by terminals in the non-CRE area among the pico-cell terminals.

A description will now be made of a scheme for dividing terminals groups to measure a load of a cell according to certain embodiments of the present disclosure will now be described.

In the method for measuring a load of a cell according to certain embodiments, terminals in the cell are divided into different terminal groups by comparing an amount of data, which is determined using an amount of data in a terminal buffer and an amount of data that can be transmitted per RB, with an amount of allocated RBs for a terminal. More specifically, in certain embodiments, terminals in the cell are divided into a first terminal group satisfying Equation (11) below and a second terminal group satisfying Equation (12) below.

$$\frac{BO}{\text{amount of transmittable data per RB}} \leq \text{amount of allocated RBs} \dots\dots\dots(11)$$

$$\frac{BO}{\text{amount of transmittable data per RB}} > \text{amount of allocated RBs} \dots\dots(12)$$

where BO represents an amount of data in a buffer of the terminal, and the amount of allocated RBs represents an amount of allocated RBs for the terminal.

In other words, the first terminal group satisfying Equation (11) means a group including terminals that are allocated all the number of RBs required for transmitting all of their BO. The first terminal group includes GBR terminals. In addition, the first terminal group also includes non-GBR terminals that have transmitted all of their BO.

Terminals belonging to the first terminal group are terminals that are allocated all the wireless resources (i.e., amount of allocated RBs) required by themselves, and it can be considered that the terminals are preferentially allocated the fixed wireless resources from the base station. In this respect, the first terminal group has the same meaning as the GBR terminal group in certain embodiments. A difference between the first terminal group and the GBR terminal group is that the first terminal group includes even the non-GBR terminal that has transmitted all of its BO.

The second terminal group satisfying Equation (12) means a group including terminals that have failed to be sufficiently allocated the number of RBs required to transmit all of their BO. The second terminal group includes non-GBR terminals that have failed to transmit all of their BO. Therefore, the second terminal group has the same meaning as the non-GBR terminal group in the first embodiment.

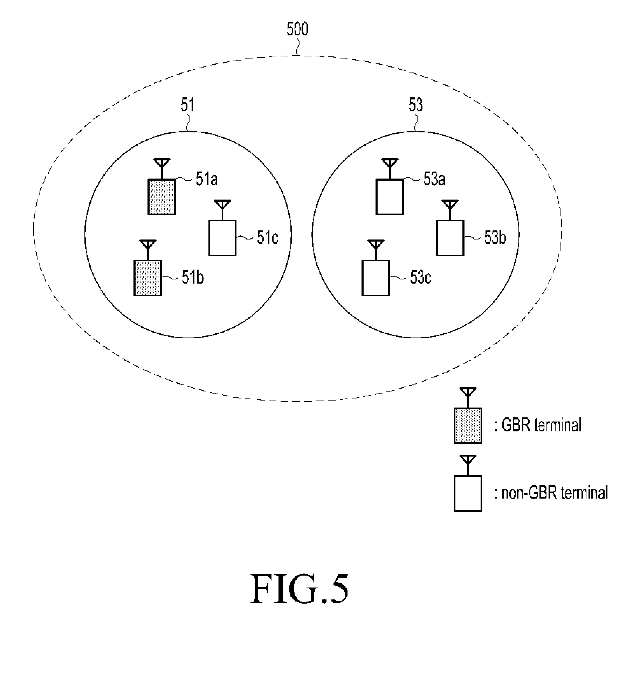

FIG. 5 illustrates a scheme of dividing terminal groups in a wireless communication system according to various embodiments of the present disclosure. As described above, in the method of measuring a load of a cell according to certain embodiments, as shown in the example of FIG. 5, terminals in a cell 500 are divided into a first terminal group 51 including terminals 51 a, 51b and 51 c that are allocated all of the wireless resources (such as an amount of allocated RBs) required by themselves, and a second terminal group 53 including terminals 53a, 53b and 53c that have failed to be sufficiently allocated the number of RBs required to transmit all of their BO. The first terminal group 51 includes even the non-GBR terminal 51c that has transmitted all of its BO.

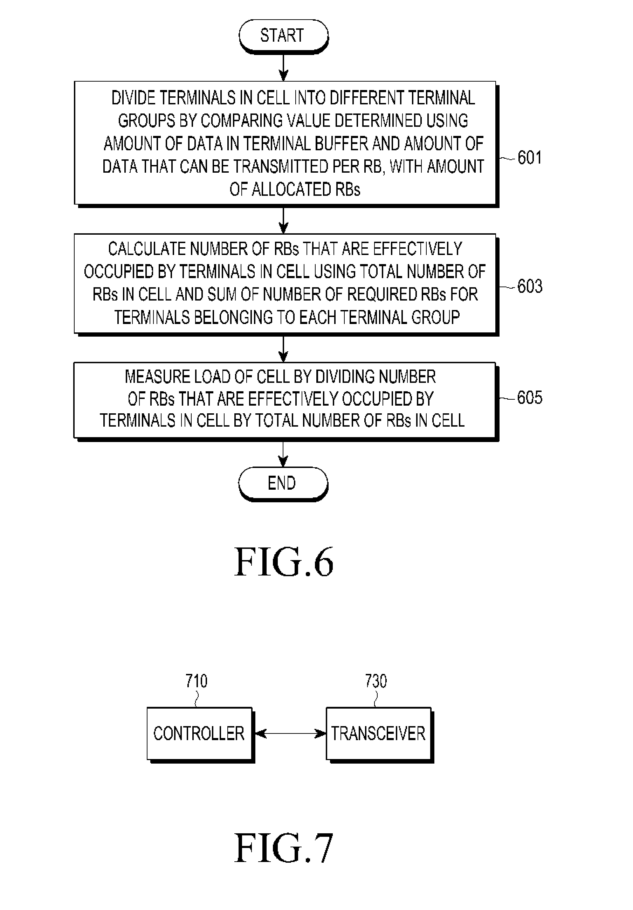

FIG. 6 illustrates a method for measuring a load of a cell in a wireless communication system according to various embodiments of the present disclosure.

Referring to FIG. 6, in step 601, a base station divides terminals in the cell into different terminal groups by comparing a value determined using BO and an amount of data that can be transmitted per RB, with an amount of allocated RBs. For example, the terminals in the cell are divided into a first terminal group including terminals that allocated all of the number of RBs required to transmit all of their BO, and a second terminal group including terminals that have failed to allocated the number of RBs required to transmit all of their BO.

In step 603, the base station calculates the number of RBs that the terminals in the cell effectively occupy using the total number of RBs in the cell and a sum of the number of required RBs for terminals belonging to each terminal group.

The number $N'_{eff}$ of RBs that the terminals in the cell effectively occupy in step 603 is written as Equation (13) below, and any derivation thereof may be the same as in various embodiments.

$$N'_{eff} = \left( N - \frac{N - \sum_{i \in A'} N'_i}{\frac{\sum_{i \in B'} N'_i}{N} + 1} \right) \dots\dots\dots\dots(13)$$

where N represents the total number or RBs used by the base station, i.e., the total number of RBs in the cell, $\sum_{i \in A'} N'_i$ represents a sum of the number of required

RBs for terminals belonging to a first terminal group A', and $\sum_{i \in B'} N'_i$ represents a sum of the number of required RBs for terminals belonging to a second terminal group B'.

In step 605, the base station measures a load L' of the cell by dividing the number of RBs that the terminals in the cell effectively occupy, by the total number of RBs in the cell. Specifically, the base station measures a load L' of the cell by dividing the number $N'_{eff}$ of RBs that the terminals in the cell effectively occupy, by the total number of RBs in the cell as shown in Equation (14) below.

$$L' = \frac{N'_{eff}}{N} \qquad \dots\dots\dots\dots\dots\dots(14)$$

When the load L' of the cell is defined as in certain embodiments, it is possible to separately determine the load that each terminal 'i' in the cell generates, in the same way as certain embodiments. When the above notation of the load is used, the load L' of the base station (or cell) is divided into a load by the first terminal group A' and a load by the second terminal group B' as shown in Equation (15) below, in certain embodiments.

$$L' = \sum_{i \in A'} L'^{A'}_i + \sum_{i \in B'} L'^{B'}_i \qquad \dots\dots\dots\dots(15)$$

where $\sum_{i \in A'} L'^{A'}_i$ represents a load by the first terminal group A' and $\sum_{i \in B'} L'^{B'}_i$ represents a load by the second terminal group B'.

FIG. 7 illustrates a configuration of a base station according to various embodiments of the present disclosure. The base station in FIG. 7 includes a controller 710 and a transceiver 730. The controller 710 includes a scheduler (not shown) for allocation wireless resources to terminals and controls the overall operation for transmitting and receiving data to/from the terminals through the transceiver 730. The controller 710 schedules allocation of wireless resources to the terminals. In accordance with the scheme described in FIGs. 1-6, the controller 710 controls an operation of dividing terminals in the cell into different terminal groups, calculating the number of wireless resources that the terminals in the cell effectively occupy, and measuring a load of the cell by dividing the calculated number of wireless resources by the total number of wireless resources in the cell.

As is apparent from the foregoing description, various embodiments of the present disclosure provide a scheme of measuring a quantitative value for a load of each cell, using the number of RBs that terminals in the cell effectively occupy, in a wireless communication system including a plurality of cells. According to certain embodiments of the present disclosure, the load can be accurately measured even when the terminals generate different amounts of traffic, and the degree of the load for each cell can be determined even when the plurality of cells are all 100% in terms of the usage of RBs. Since the load that some terminals in the cell generate can be separately determined, embodiments of the present disclosure can be applied to technologies such as eICIC.

Although the present disclosure has been described with an exemplary embodiment, various changes and modifications may be suggested to one skilled in the art. It is intended that the present disclosure encompass such changes and modifications as fall within the scope of the appended claims.

## Claims

**1.** A method for measuring a load of a cell in a wireless communication system, the method comprising:

dividing terminals in a cell into terminal groups that are different in a resource allocation scheme;
calculating a number of wireless resources that the terminals effectively occupy based on a number of required wireless resources for each terminal group; and

measuring a load of the cell using the calculated number of wireless resources.

2. The method of claim 1, wherein the load of the cell is measured by dividing the calculated number of wireless resources by a total number of wireless resources in the cell.

3. The method of claim 1, wherein calculating the number of wireless resources comprises dividing the terminals into a Guaranteed Bit Rate (GBR) terminal group and a non-GBR terminal group.

4. The method of claim 3, wherein measuring a load of the cell comprises separately measuring a load of the GBR terminal group and a load of the non-GBR terminal group.

5. The method of claim 3, wherein calculating the number of wireless resources comprises calculating the number of wireless resources that the terminals in the cell effectively occupy, using a total number of wireless resources in the cell,
a sum of the number of required wireless resources for the terminals belonging to the GBR terminal group, and a sum of the number of required wireless resources for the terminals belonging to the non-GBR terminal group.

6. The method of claim 5, wherein the number, $N_{eff}$, of wireless resources
that the terminals effectively occupy is calculated using the following equation;

$$N_{eff} = \left( N - \frac{N - \sum_{i \in A} N_i}{\frac{\sum_{i \in B} N_i}{N} + 1} \right)$$

where N denotes the total number of wireless resources in the cell, i denotes a terminal index, $\sum_{i \in A} N_i$ denotes the sum of the amount of required wireless resources for the terminals belonging to the GBR terminal group, and

$\sum_{i \in B} N_i$ denotes the sum of the number of required wireless resources for the terminals belonging to the non-GBR terminal group.

7. The method of claim 1, wherein calculating the number of wireless resources comprises dividing the terminals into different terminal groups by comparing an amount of allocated wireless resources with a value that is determined using an amount of data in a buffer of each terminal and an amount of data that can be transmitted per wireless resource unit.

8. The method of claim 7, wherein the different terminal groups are divided into a first terminal group including the terminals with the allocated amount of wireless resources required to transmit all of the amount of data in the buffer and a second terminal group including the terminals without the allocated wireless resources required to transmit all of the amount of data in the buffer.

9. The method of claim 8, wherein measuring the load of the cell comprises separately measuring a load of the first terminal group and a load of the second terminal group.

10. The method of claim 8, wherein calculating the number of wireless resources comprises calculating the number of wireless resources that the terminals in the cell effectively occupy using a total number of wireless resources in the cell, a sum of the number of required wireless resources for the terminals belonging to the first terminal group, and a sum of the number of required wireless resources for the terminals belonging to the second terminal group.

11. The method of claim 10, wherein the number, $N'_{eff}$, of wireless resources that the terminals effectively occupy is calculated using the following equation;

$$N'_{eff} = \left( N - \frac{N - \sum_{i \in A'} N'_i}{\frac{\sum_{i \in B'} N'_i}{N} + 1} \right)$$

where N denotes the total number of wireless resources in the cell, i denotes a terminal index, $\sum_{i \in A'} N'_i$ denotes the sum of the number of required wireless resources for the terminals belonging to the first terminal group, and $\sum_{i \in B'} N'_i$ denotes the sum of the number of required wireless resources for the terminals belonging to the second terminal group.

12. A base station for measuring a load of a cell in a wireless communication system, the base station comprising:

a transceiver configured to transmit and receive data to or from terminals in the cell; and
a controller configured to:

schedule an allocation of wireless resources to the terminals;
divide the terminals into terminal groups that are different in resource allocation scheme;
calculate a number of wireless resources that the terminals effectively occupy based on a number of required wireless resources for each terminal group; and
measure a load of the cell using the calculated number of wireless resources.

13. The base station of claim 12 adapted to operate according to one of claims 2 to 11.


**Amended claims under Art. 19.1 PCT**

1. A method for measuring a load of a cell in a wireless communication system, the method comprising:

dividing terminals in a cell into terminal groups that are different in a resource allocation scheme;
calculating a number of wireless resources that the terminals effectively occupy based on a number of required wireless resources for each terminal group; and
measuring a load of the cell using the calculated number of wireless resources.

2. The method of claim 1, wherein the load of the cell is measured by dividing the calculated number of wireless resources by a total number of wireless resources in the cell.

3. The method of claim 1, wherein calculating the number of wireless resources comprises dividing the terminals into a Guaranteed Bit Rate (GBR) terminal group and a non-GBR terminal group.

4. The method of claim 3, wherein measuring a load of the cell comprises separately measuring a load of the GBR terminal group and a load of the non-GBR terminal group.

5. The method of claim 3, wherein calculating the number of wireless resources comprises calculating the number of wireless resources that the terminals in the cell effectively occupy, using a total number of wireless resources in the cell, a sum of the number of required wireless resources for the terminals belonging to the GBR terminal group, and a sum of the number of required wireless resources for the terminals belonging to the non-GBR terminal group.

6. The method of claim 5, wherein the number, $N_{eff}$, of wireless resources that the terminals effectively occupy is calculated using the following equation;

$$N_{eff} = \left( N - \cfrac{N - \sum_{i \in A} N_i}{\cfrac{\sum_{i \in B} N_i}{N} + 1} \right)$$

where N denotes the total number of wireless resources in the cell, i denotes a terminal index, $\sum_{i \in A} N_i$ denotes the sum of the amount of required wireless resources for the terminals belonging to the GBR terminal group, and $\sum_{i \in B} N_i$ denotes the sum of the number of required wireless resources for the terminals belonging to the non-GBR terminal group.

7. The method of claim 1, wherein calculating the number of wireless resources comprises dividing the terminals into different terminal groups by comparing an amount of allocated wireless resources with a value that is determined using an amount of data in a buffer of each terminal and an amount of data that can be transmitted per wireless resource unit.

8. The method of claim 7, wherein the different terminal groups are divided into a first terminal group including the terminals with the allocated amount of wireless resources required to transmit all of the amount of data in the buffer and a second terminal group including the terminals without the allocated wireless resources required to transmit all of the amount of data in the buffer.

9. The method of claim 8, wherein measuring the load of the cell comprises separately measuring a load of the first terminal group and a load of the second terminal group.

10. The method of claim 8, wherein calculating the number of wireless resources comprises calculating the number of wireless resources that the terminals in the cell effectively occupy using a total number of wireless resources in the cell, a sum of the number of required wireless resources for the terminals belonging to the first terminal group, and a sum of the number of required wireless resources for the terminals belonging to the second terminal group.

11. The method of claim 10, wherein the number, N'$_{eff}$, of wireless resources that the terminals effectively occupy is calculated using the following equation;

$$N'_{eff} = \left( N - \cfrac{N - \sum_{i \in A'} N'_i}{\cfrac{\sum_{i \in B'} N'_i}{N} + 1} \right)$$

where N denotes the total number of wireless resources in the cell, i denotes a terminal index,

$\sum_{i \in A'} N'_i$ denotes the sum of the number of required wireless resources for the terminals belonging to the first terminal group, and $\sum_{i \in B'} N'_i$ denotes the sum of the number of required wireless resourc es for the terminals belonging to the second terminal group.

12. A base station for measuring a load of a cell in a wireless communication system, the base station comprising:

a transceiver configured to transmit and receive data to or from terminals in the cell; and
a controller configured to:

schedule an allocation of wireless resources to the terminals;
divide the terminals into terminal groups that are different in resource allocation scheme;
calculate a number of wireless resources that the terminals effectively occupy based on a number of required wireless resources for each terminal group; and
measure a load of the cell using the calculated number of wireless resources.

**13.** The base station of claim 12 adapted to operate according to one of claims 2 to 11.

FIG.1

FIG.2

FIG.3

START

DIVIDE TERMINALS IN CELL INTO GBR TERMINAL
GROUP AND NON-GBR TERMINAL GROUP ～401

CALCULATE NUMBER OF RBs THAT ARE EFFECTIVELY
OCCUPIED BY TERMINALS IN CELL USING TOTAL NUMBER
OF RBs IN CELL, SUM OF NUMBER OF REQUIRED RBs FOR
TERMINALS BELONGING TO GBR TERMINAL GROUP, AND ～403
SUM OF NUMBER OF REQUIRED RBs FOR TERMINALS
BELONGING TO NON-GBR TERMINAL GROUP

MEASURE LOAD OF CELL BY DIVIDING NUMBER
OF RBs THAT ARE EFFECTIVELY OCCUPIED BY ～405
TERMINALS IN CELL BY TOTAL NUMBER OF RBs IN CELL

END

# FIG.4

FIG.5

START

DIVIDE TERMINALS IN CELL INTO DIFFERENT TERMINAL GROUPS BY COMPARING VALUE DETERMINED USING AMOUNT OF DATA IN TERMINAL BUFFER AND AMOUNT OF DATA THAT CAN BE TRANSMITTED PER RB, WITH AMOUNT OF ALLOCATED RBs ~601

CALCULATE NUMBER OF RBs THAT ARE EFFECTIVELY OCCUPIED BY TERMINALS IN CELL USING TOTAL NUMBER OF RBs IN CELL AND SUM OF NUMBER OF REQUIRED RBs FOR TERMINALS BELONGING TO EACH TERMINAL GROUP ~603

MEASURE LOAD OF CELL BY DIVIDING NUMBER OF RBs THAT ARE EFFECTIVELY OCCUPIED BY TERMINALS IN CELL BY TOTAL NUMBER OF RBs IN CELL ~605

END

# FIG.6

710

730

CONTROLLER ◄──► TRANSCEIVER

# FIG.7

**EUROPEAN SEARCH REPORT**

Application Number

EP 15 15 6405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN ZHANG ET AL: "A Two-Layer Mobility Load Balancing in LTE self-organization networks", COMMUNICATION TECHNOLOGY (ICCT), 2011 IEEE 13TH INTERNATIONAL CONFERENCE ON, IEEE, 25 September 2011 (2011-09-25), pages 925-929, XP032120296, DOI: 10.1109/ICCT.2011.6158014 ISBN: 978-1-61284-306-3 | 1,3,4, 12,13 | INV. H04W28/02 H04L12/26 H04W24/08 H04W72/00 |
| Y | * paragraph [III.] * | 7-11 | |
| X | PETER SZILAGYI ET AL: "Enhanced Mobility Load Balancing Optimisation in LTE", 2012 IEEE 23RD INTERNATIONAL SYMPOSIUM ON PERSONAL, INDOOR AND MOBILE RADIO COMMUNICATIONS (PIMRC 2012) : SYDNEY, AUSTRALIA, 9 - 12 SEPTEMBER 2012, IEEE, PISCATAWAY, NJ, 9 September 2012 (2012-09-09), pages 997-1003, XP032273122, DOI: 10.1109/PIMRC.2012.6362930 ISBN: 978-1-4673-2566-0 * paragraphs [0II.] - [II.A.] * | 1,3,12, 13 | |
| X | US 2011/199900 A1 (LUDWIG REINER [DE] ET AL) 18 August 2011 (2011-08-18) * paragraphs [0018], [0034], [0038] - [0042], [0049] * * paragraphs [0086] - [0097], [0102] - [0107]; figure 5 * | 1-6,12, 13 | TECHNICAL FIELDS SEARCHED (IPC)<br><br>H04W<br>H04L |
| X | EP 2 627 117 A2 (SAMSUNG ELECTRONICS CO LTD [KR]) 14 August 2013 (2013-08-14) * paragraphs [0048] - [0051] * | 1,3,12, 13 | |

-/--

The present search report has been drawn up for all claims

| Place of search | Date of completion of the search | Examiner |
|---|---|---|
| The Hague | 3 July 2015 | Kesting, Christiane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 15 15 6405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XIAO XUE ET AL: "Inter-cell interference coordination scheme based on CoMP", ADVANCED COMMUNICATION TECHNOLOGY (ICACT), 2012 14TH INTERNATIONAL CONFERENCE ON, IEEE, 19 February 2012 (2012-02-19), pages 33-36, XP032153064, ISBN: 978-1-4673-0150-3 * paragraph [00IV]; table 2 * ----- | 7-11 | |

TECHNICAL FIELDS
SEARCHED      (IPC)

The present search report has been drawn up for all claims

| Place of search | Date of completion of the search | Examiner |
|---|---|---|
| The Hague | 3 July 2015 | Kesting, Christiane |

EPO FORM 1503 03.82 (P04C01)

**ANNEX TO THE EUROPEAN SEARCH REPORT
ON EUROPEAN PATENT APPLICATION NO.**

EP 15 15 6405

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2015

| Patent document cited in search report | Publication date | Patent family member(s) | Publication date |
|---|---|---|---|
| US 2011199900 A1 | 18-08-2011 | CN 102037688 A | 27-04-2011 |
| | | EP 2283620 A1 | 16-02-2011 |
| | | JP 5548193 B2 | 16-07-2014 |
| | | JP 2011525065 A | 08-09-2011 |
| | | JP 2014147115 A | 14-08-2014 |
| | | US 2011199900 A1 | 18-08-2011 |
| | | US 2013336124 A1 | 19-12-2013 |
| | | WO 2009141016 A1 | 26-11-2009 |
| EP 2627117 A2 | 14-08-2013 | EP 2627117 A2 | 14-08-2013 |
| | | KR 20130091051 A | 16-08-2013 |
| | | US 2013201832 A1 | 08-08-2013 |

EPO FORM P0459

For more details about this annex : see Official Journal of the European Patent Office, No. 12/82